# FASCICULE DE BREVET EUROPEEN

(11) **EP 2 213 407 B1**
(45) Date de publication et mention de la délivrance du brevet: **04.04.2012**
(21) Numéro de dépôt: 10151968.4
(22) Date de dépôt: 28.01.2010
(51) Int. Cl.: B23P 15/00, F03B 1/02, B23P 6/00

(54) **Composant neuf de machine hydraulique, procédé de fabrication ou de maintenance d'un tel composant**
Neue Komponente einer Hydraulischen Maschine, Verfahren zur Herstellung oder Reparatur einer solchen Komponente
Hydraulic machine newly manufactured component, method for manufacturing or repairing such a component

(30) Priorité: 30.01.2009 FR 0950594
(43) Date de publication de la demande: 04.08.2010
(73) Titulaire: Alstom Hydro France, 92300 Levallois Perret (FR)
(72) Inventeur: Prigent, Serge, 38700 Le Sappey en Chartreuse (FR)
(74) Mandataire: Myon, Gérard Jean-Pierre

(56) Documents cités:
- CH-A- 216 126
- GB-A- 723 248
- GB-A- 995 654
- JP-A- 1 219 301
- JP-A- 2001 153 019

## Description

L'invention a trait à un procédé de fabrication d'un composant de machine hydraulique selon le préambule de la revendication 1. L'invention a également trait à un procédé de maintenance d'un tel composant selon le préambule de la revendication 6, ainsi qu'à un composant neuf de machine hydraulique selon le préambule de la revendication 7. Le document GB-A-995 654 décrit un tel composant et de tels procédés.

Au sens de la présente invention, une machine hydraulique peut être une turbine, une pompe ou une turbine pompe, utilisées, par exemple, dans une usine de production d'électricité. Une turbine est alimentée avec un écoulement d'eau forcée à partir d'un cours d'eau ou d'une retenue d'eau dans laquelle se déversent un ou plusieurs cours d'eau. En fonction de la nature des terrains que traversent ce ou ces cours d'eau et des conditions météorologiques, l'eau alimentant la machine peut être plus ou moins chargée en particules abrasives, telles que du sable ou des sédiments. Lorsque ces particules abrasives traversent la turbine, elles usent les surfaces de cette turbine qui sont mouillées par l'écoulement d'eau. Ceci impose des opérations de maintenance, notamment le remplacement complet de certains composants. Ceci est onéreux et induit un temps d'immobilisation de la machine qui peut être long.

Pour palier ces problèmes, il est connu de couvrir les surfaces mouillées d'un composant de machine hydraulique avec un revêtement résistant à l'abrasion. Lorsque la couche de revêtement résistant a été usée par les particules contenues dans l'écoulement, il est nécessaire de procéder à l'échange complet du composant ou de renvoyer ce composant vers un centre de réparation où le profil hydraulique sera restauré et à nouveau revêtu d'une couche de matériau de protection résistant à l'usure.

GB-A-995 654 prévoit de souder un joint sur une partie fixe d'une turbine Francis, d'une façon qui permet son démontage. Un tel joint peut s'user relativement rapidement.

C'est à ces inconvenients qu'entend plus particulièrement remédier l'invention en proposant un procédé de fabrication d'un composant de machine hydraulique qui facilite les étapes ultérieures de maintenance d'une machine hydraulique à laquelle appartient un tel composant.

A cet effet, l'invention concerne un procédé de fabrication d'un composant de machine hydraulique dont une partie au moins est susceptible d'usure, ce procédé comprenant des étapes consistant à a) préfabriquer une garniture en brasant un élément massif en céramique sur un support en métal et b) fixer, une garniture sur un corps principal du composant au moyen d'au moins un cordon de soudure et en ménageant un talon non soudé entre la garniture et le corps principal.

Grâce à l'invention, la garniture présente une bonne résistance à l'usure, au niveau de son élément massif en céramique, alors qu'elle peut être aisément soudée sur le corps principal, au niveau de son support en métal. En outre, la garniture est rapportée sur le corps principal du composant d'une façon qui facilite son démontage ultérieur, lorsque la garniture a subi une usure qui justifie qu'elle soit remplacée par une autre garniture du même type. En effet, le talon non soudé permet une séparation aisée de la garniture et du corps principal. Au sens de l'invention, un talon est une zone d'interface entre deux pièces où ces deux pièces sont en appui simple l'une contre l'autre.

Selon des aspects avantageux mais non obligatoires de l'invention, un tel procédé peut comprendre une ou plusieurs des étapes suivantes :
- une étape c) consistant à apposer, au moins sur la garniture et par projection thermique, au moins une couche de matériau résistant à l'usure.
- une étape d) préalable à l'étape c) et consistant à apposer, au moins sur la garniture et par projection thermique, une sous-couche de métallisation destinée à être recouverte par la couche de matériau résistant à l'usure.

De façon avantageuse, l'étape a) précède l'étape d) et, lors de cette étape d), la sous-couche est apposée en recouvrant au moins la surface visible de l'élément massif, le joint de brasage entre l'élément massif et le support et une partie des surfaces latérales du support.

De façon avantageuse, lors de l'étape a), l'élément massif en céramique et le support en métal sont pré-positionnés en engageant un élément en saillie par rapport à une surface d'une première pièce, parmi l'élément massif en céramique et le support en métal, dans un logement correspondant en creux par rapport à une surface de l'autre pièce, parmi l'élément massif en céramique et le support en métal, avant le brasage entre ces pièces.

L'invention concerne également un procédé de maintenance d'un composant de machine hydraulique fabriqué selon le procédé mentionné ci-dessus, ce procédé de maintenance comprenant des étapes consistant à :
e) détruire le ou les cordons de soudure ;
f) séparer la garniture du corps principal en écartant l'une de l'autre les surfaces de la garniture et du corps principal qui forment le talon non soudé ; et
g) fixer, par au moins un nouveau cordon de soudure et en ménageant un nouveau talon non soudé une nouvelle garniture sur le corps principal, à la place de celle qui a été précédemment séparée de ce corps principal. Conformément à l'invention, la nouvelle garniture est formée en brasant un élément massif en céramique sur un support en métal.

L'invention concerne enfin un composant neuf de machine hydraulique, dont une partie au moins est sujette a l'usure. Ce composant comprend au moins une garniture fixée, par au moins un cordon de soudure qui borde un talon non soudé, sur un corps principal du composant, cette garniture étant formée par un élément massif en céramique brasé sur un support en métal et constituant la partie du composant qui est sujette à l'usure.

Selon des caractéristiques avantageuses mais non obligatoires de l'invention, un tel composant peut incorporer une ou plusieurs des caractéristiques suivantes, prises dans toutes combinaisons techniquement admissibles :
- La garniture est revêtue d'une couche de matériau résistant à l'usure.
- La garniture est revêtue d'une sous-couche de métallisation, elle-même recouverte par la couche de matériau résistant à l'usure. La couche de matériau résistant à l'usure peut être réalisée en carbure de tungstène, en diamant, en nitrure de bore, en alliage de type SᵢC ou Al₂O₃ et la sous-couche de métallisation peut être réalisée en acier, ou en alliage à base de nickel, de cobalt ou de chrome.
- La garniture est fixée sur le corps principal par deux cordons de soudure, alors que le talon non soudé est formé entre ces deux cordons.
- L'élément massif en céramique comprend une matrice métallique choisie parmi les alliages CoCr, NiCr, NiFeBSi et des particules ou une poudre dispersées dans la matrice métallique, choisies parmi le diamant, le nitrure de bore, le carbure de tungstène, les alliages de type SiC ou Al₂O₃ ou des mélanges de ceux-ci.
- Une première pièce, parmi l'élément massif en céramique et le support en métal, est pourvue d'un pied en saillie par rapport à une surface en appui contre une surface de l'autre pièce dans laquelle est défini un logement en creux de réception du pied.
- Le composant est un auget de turbine Pelton et la garniture est montée au niveau d'un bord d'attaque et/ou d'un bord de fuite de cet auget.
- Le composant est une couronne ou une partie fixe de labyrinthe de turbine et la garniture définit un interstice de passage d'un écoulement d'eau secondaire.

L'invention sera mieux comprise en d'autres avantages de celle-ci apparaîtront plus clairement à la lumière de la description qui va suivre de plusieurs modes de réalisation d'un composant de machine hydraulique conforme à son principe, de son procédé de fabrication et de son procédé de maintenance, donnée uniquement à titre d'exemple et faite en référence aux dessins annexés dans lesquels:
- la figure 1 est une section de principe d'un auget de roue de turbine Pelton conforme à l'invention
- la figure 2 est une vue à plus grande échelle du détail II à la figure 1
- la figure 3 est une vue analogue à la figure 2 pour un auget conforme à une deuxième mode de réalisation de l'invention
- la figure 4 est une représentation schématique d'un procédé de maintenance de l'auget représenté partiellement à la figure 3,
- la figure 5 est une vue analogue à la figure 2 à la plus petite échelle pour un auget conforme à un troisième, mode de réalisation de l'invention, et
- la figure 6 est une représentation schématique de principe d'une partie de turbine Francis mettant en oeuvre l'invention au niveau d'un joint à labyrinthe.

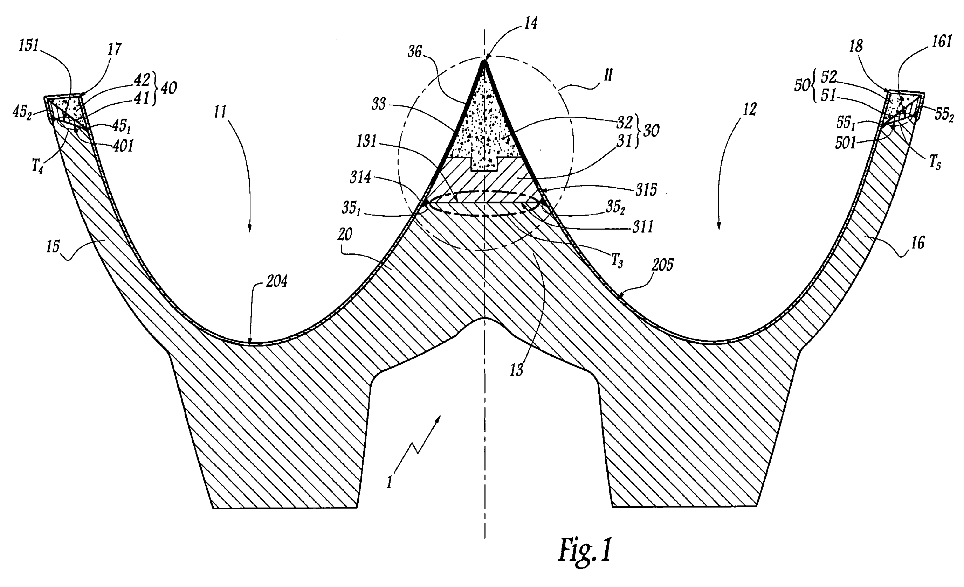

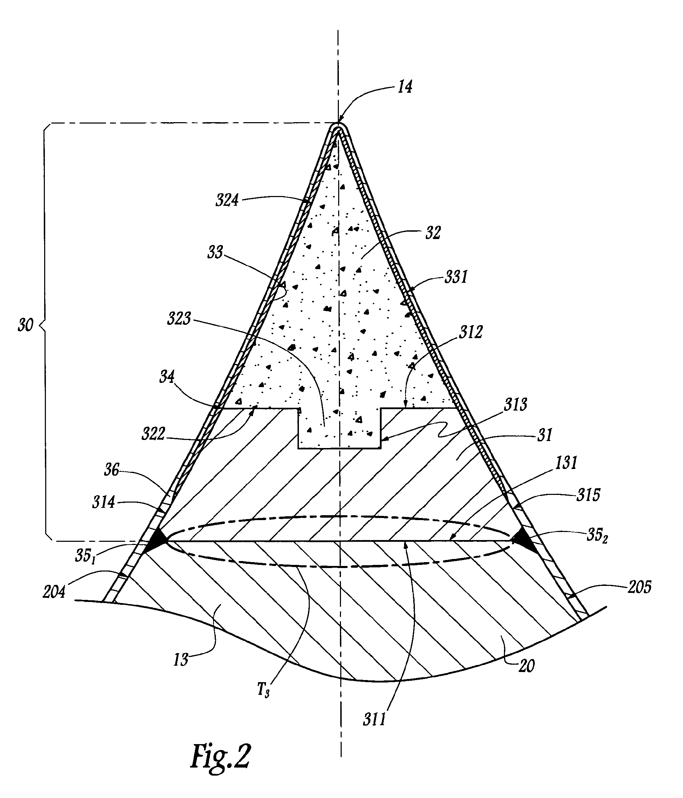

L'auget 1 représenté aux figures 1 et 2 est destiné à être monté sur une roue de turbine Pelton. Cet auget 1 définit deux demi-godets 11 et 12 séparés par une arête centrale 13 qui forme un bord d'attaque 14 de l'auget 1, en plus des bords d'attaque non représentés qui sont situés au niveau d'une échancrure avant, également non représentée, de l'auget 1. Chaque godet 11 et 12 est délimité, à l'opposé de l'arête centrale 13, par une paroi latérale 15 ou 16. Les parois 15 et 16 forment respectivement deux bords de fuite 17 et 18 de l'auget 1.

Les surfaces concaves qui définissent les demi-godets 11 et 12 sont des surfaces mouillées de l'auget 1, en ce sens qu'elles sont sensées être léchées par l'écoulement forcé d'eau injecté vers la roue de la turbine. Au sens de la présente invention, une surface mouillée est une surface d'un composant hydraulique qui est destinée à venir en contact avec l'écoulement forcé d'eau traversant la machine.

Les parties de l'auget 1 constituant les bords d'attaque et de fuite 14, 17 et 18 sont plus particulièrement soumises à l'usure due au passage des particules abrasives contenues dans l'écoulement d'eau. Le bord d'attaque 14 est soumis à un effet d'usure dit « de martelage » de la part des particules abrasives, en raison de l'incidence du jet d'eau dirigé vers l'auget 1, ce jet étant perpendiculaire au bord 14. Par ailleurs, les bords de fuite 17 et 18 subissent un effet d'usure dit « de goujage » résultant de l'écoulement de particules abrasives selon des directions parallèles à la surface mouillée de l'auget, au voisinage de ces bords 17 et 18.

En tenant compte de cette usure privilégiée de ces parties, l'auget 1 comprend un corps principal 20 et trois garnitures 30, 40 et 50 immobilisées respectivement sur l'arête 13 et sur les parois 15 et 16, ces garnitures faisant partie de l'auget 1 dès sa première fabrication. En d'autres termes, l'auget 1 neuf est déjà pourvu des garnitures 30, 40 et 50.

Le corps 20 est monobloc et réalisé en acier, de préférence en acier inoxydable.

La garniture 30 comprend un support 31 en acier inoxydable et un élément massif 32 en matériau céramique. A titre d'exemple, le matériau constitutif de l'élément 32 peut être choisi parmi les céramiques techniques comprenant une matrice métallique dans laquelle sont dispersées des particules ou une poudre, d'un matériau dur résistant à l'abrasion. La matrice métallique peut par exemple être choisie parmi les alliages suivants CoCr, NiCr, NiFeBSi, tandis que le matériau constitutif de la poudre peut être choisi parmi le diamant, le nitrure de bore, le carbure de tungstène (WC), les alliages de type SiC, Al₂O₃ ou des mélanges de ceux-ci.

Le support 31 a une première face 311 qui est plane et qui présente la même géométrie qu'une surface d'extrémité 131 de la partie de l'arête 13, formée par le corps 20, laquelle est également plane. Le support 31 est pourvu d'une deuxième surface 312, opposée à la surface 311 et qui définit un logement en creux 313.

L'élément 32 est pourvu d'un pied 323 qui s'étend à partir d'une surface 322 de l'élément 32 destinée à venir en appui contre la surface 312 du support 31. Les dimensions du pied 323 sont compatibles avec son introduction dans le logement 313, à faible jeu ou en force. Le pied 323 constitue donc un moyen de positionnement relatif des pièces 31 et 32. Selon une variante non représentée, le support 31 peut être pourvu d'un relief en saillie comparable au pied 323, alors que l'élément 32 est pourvu d'un logement correspondant, comparable au logement 313, ces moyens contribuant au positionnement relatif des pièces 31 et 32. Il est également possible que les surfaces 312 et 322 soient dépourvues de moyens de positionnement relatif des pièces 31 et 32.

Lors de la fabrication de la garniture 30, les surfaces 312 et 322 sont amenées en contact ou à proximité l'une de l'autre, le pied 323 étant introduit dans le logement 313, puis l'élément 32 est brasé sur le support 31.

Le pied 323 et le logement 313 assurent que le brasage entre les pièces 31 et 32 a lieu alors que ces pièces sont correctement positionnées l'une par rapport à l'autre.

La brasure réalisée peut être alliée à de l'argent et le mode de chauffage utilisé peut être de type à induction, à flamme ou autre. Une immobilisation ferme de l'élément 32 sur le support 31 est ainsi obtenue car les forces d'accrochage entre les éléments 31 et 32 s'exercent sur l'ensemble des surfaces 312 et 322 et sur les surfaces en regard du pied 323 et du logement 313.

On note 314 et 315 les surfaces latérales du support 31 qui prolongent respectivement les surfaces concaves 204 et 205 du corps 20 définissant la géométrie des demi-godets 11 et 12. On note par ailleurs 324 la surface extérieure de l'élément 32, c'est-à-dire sa surface qui est seule accessible lorsque les éléments 31 et 32 sont assemblés et qui prolonge alors les surfaces 314 et 315.

Après le brasage des éléments 31 et 32 l'un sur l'autre, une sous-couche 33 de métallisation est apposée sur l'ensemble de la surface 324 et sur les portions des surfaces 314 et 315 les plus proches de l'élément 32. Cette sous-couche 33 recouvre également le joint de brasage 34 formé à la jonction des surfaces 314 et 315, d'une part, avec la surface 324, d'autre part. Cette sous-couche 33 de métallisation est déposée par un procédé de projection thermique et réalisée en acier, ou en alliage à base de nickel, de cobalt ou de chrome, selon les propriétés recherchées. L'épaisseur de la couche 33 est comprise entre quelques centièmes de millimètres et quelques millimètres.

Cette couche de métallisation 33 permet d'harmoniser les propriétés des surfaces externes des éléments 31 et 32, notamment en termes de dureté. En effet, dans le cas où l'élément 32 est réalisé en carbure de tungstène, sa dureté Vickers de surface a une valeur supérieure 1000 Hv, alors que la dureté Vickers de surface de l'acier constituant le support 31 est de l'ordre de 300 Hv et que la dureté Vickers de surface du joint de brasage 34 est inférieure à 100 Hv. En l'absence de la couche 33, les duretés de surface de la garniture 30 sont donc hétérogènes, ce qui est susceptible de gêner le dépôt ultérieur d'un revêtement résistant à l'usure. En outre, les surfaces externes des pièces 31 et 32 et du point de brasage ont des rugosités différentes, alors que la surface externe 331 de la sous-couche 33 a une rugosité sensiblement constante. Ainsi, la sous-couche de métallisation 33 permet d'harmoniser la dureté de surface et la rugosité apparentes de la garniture 30. Ceci optimise l'adhérence d'un dépôt ultérieur d'un revêtement anti-abrasion.

Une fois la garniture 30 ainsi préparée, celle-ci est soudée sur l'arête 13 au moyen d'une soudure à talon comportant deux cordons de soudure 35₁ et 35₂ disposés respectivement à la jonction entre les surfaces 314 et 204, d'une part, 315 et 205, d'autre part. Entre les cordons 35₁ et 35₂, les surfaces 131 et 311 forment un talon T₃ non soudé, c'est-à-dire une zone d'interface où le corps 20 et la garniture 30 sont en appui simple l'un contre l'autre, sans être brasés ensemble. Comme le talon T₃ est formé entre les cordons 35₁ et 35₂ qui le bordent, il est isolé de l'extérieur par ces cordons.

La soudure à talon réalisée entre les pièces 20 et 30 est adaptée au fait que ces pièces sont toutes deux en acier. Elle est suffisante pour assurer l'immobilisation de la garniture 30 sur le corps 20 car la garniture 30 est peu sollicitée dans un sens d'arrachement par rapport au corps 20 du fait du sens de circulation de l'écoulement forcé d'eau dans l'auget 1.

En outre, la soudure à talon résulte dans une élévation relativement faible de la température du support 31, ce qui ne risque pas de dégrader la liaison par brasage réalisée à l'interface entre les éléments 31 et 32.

En variante, la soudure entre les pièces 20 et 30 pourrait ne comprendre qu'un seul cordon soudé, à la jonction entre les surfaces 204 et 314 ou à la jonction entre les surfaces 205 et 315. Cette approche est toutefois moins robuste qu'une soudure à deux cordons soudés. Dans ce cas, la couche de matériau anti-abrasion recouvre au moins le côté du talon qui n'est pas bordé par un cordon de soudure.

Une fois la garniture 30 immobilisée sur le corps 20 par les cordons de soudure 35₁ et 35₂, une couche 36 de matériau résistant à l'usure par abrasion due à l'écoulement d'eau est apposée sur les surfaces 204 et 205, sur les parties encore accessibles des surfaces 314 et 315, et sur la surface extérieure 331 de la sous-couche 33. Par exemple, la couche 36 peut être réalisée en carbure de tungstène et déposée par projection thermique selon la technique de combustion par pistolet haute vélocité (High Velocity Oxygen-Fuel). D'autres matériaux résistant à l'abrasion peuvent être utilisés pour constituer la couche 36, par exemple du diamant, du nitrure de bore, des alliages de type SiC ou Al₂O₃ ou tout autre céramique technique dispersée dans une matrice métallique. D'autres techniques d'application peuvent être employées, notamment HVAF (High Velocity Air Fuel) ou D-Gun (Detonation gun) ou un dépôt par plasma.

La garniture 40 est réalisée à partir d'un élément d'usure en acier qui est solidarisé à la paroi 15 au moyen d'une soudure à talon dont les cordons soudés 45₁ et 45₂ délimitent entre eux un talon non soudé T₄, à l'interface entre une surface d'extrémité 151 de la paroi 15 et une surface de forme correspondante 401 de la garniture 40. La couche 36 se prolonge sur la surface mouillée de l'auget 1 pour recouvrir la garniture 40. De la même façon, la garniture 50 est immobilisée sur l'paroi 16 au moyen d'une soudure dont les talons 55₁ et 55₂ délimitent entre eux un talon non soudé T₅, entre des surfaces en regard et en appui 161 et 501 ménagées respectivement à l'extrémité de la paroi 16 et sur la garniture 50. La couche 36 se prolonge sur la surface mouillée de l'auget 1 jusqu'à recouvrir la garniture 50.

Même si la couche 36, d'une part, et l'élément 32, d'autre part, sont conçus pour résister à l'abrasion dû à la circulation de particules solides sur le bord d'attaque 14 de l'auget 1, ces parties finissent par s'user, ce qui diminue le rendement de la roue et peut induire des phénomènes perturbatoires, tels que de la cavitation. Lorsque la garniture 30 ou la couche 36 est usée au niveau du bord d'attaque 14, la garniture 30 peut être facilement remplacée en arasant les cordons de soudure 35₁ et 35₂, à travers la couche 36. Il est alors possible de séparer la garniture 30 de l'arête 13 puis d'y souder une nouvelle garniture 30 préalablement préparée comme indiqué ci-dessus. On peut ensuite procéder à un nouveau dépôt ou à un complément de dépôt de la couche 36.

Ainsi, la conception de l'auget 1 et sa fabrication initiale sont adaptées aux opérations de maintenance ultérieures, car le mode de fixation de la garniture 30 sur le corps principal 20, au moyen d'une soudure à talon, facilite la désolidarisation de cette garniture et son remplacement par une autre garniture identique lorsque cela est nécessaire.

Les garnitures 40 et 50 sont également constituées par brasage d'un élément massif en céramique 42, respectivement 52, sur un support en métal 41, respectivement 51. En variante, les garnitures 40 et 50 peuvent être réalisées dans une pièce de métal monobloc.

De la même façon, en cas d'usure des garnitures 40 ou 50, celles-ci peuvent être aisément désolidarisées du corps principal 20, en arasant les cordons 45₁, 45₂, 55₁ ou 55₂, et remplacées par des garnitures analogues. L'usure au niveau des bords de fuite 17 et 18 étant plus faible qu'au niveau du bord d'attaque, les garnitures 40 et 50 sont optionnelles.

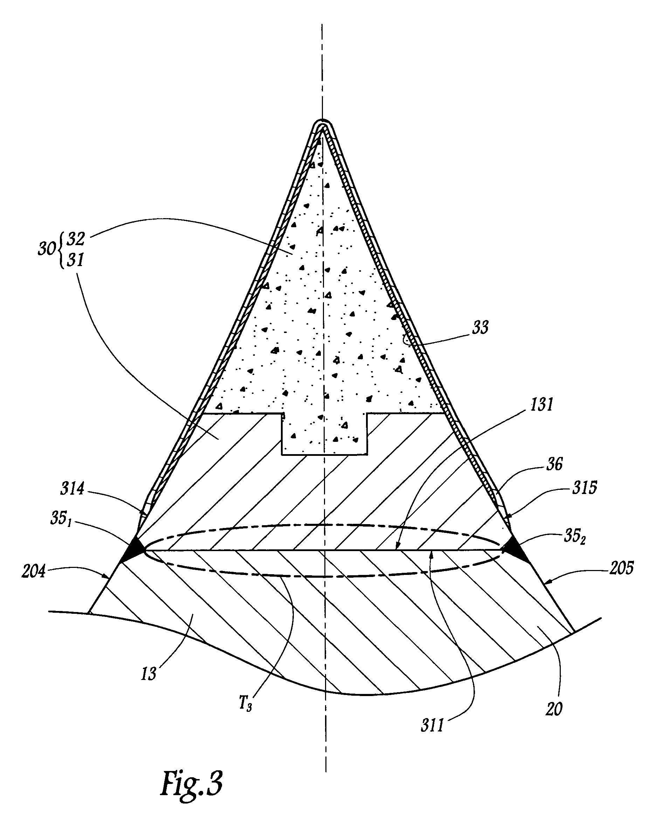

Dans les deuxième à cinquième modes de réalisation de l'invention représentés respectivement aux figures 3 à 6, les éléments analogues à ceux du premier mode de réalisation portent les mêmes références. Dans ce qui suit, on décrit ce qui distingue ces modes de réalisation du premier mode de réalisation.

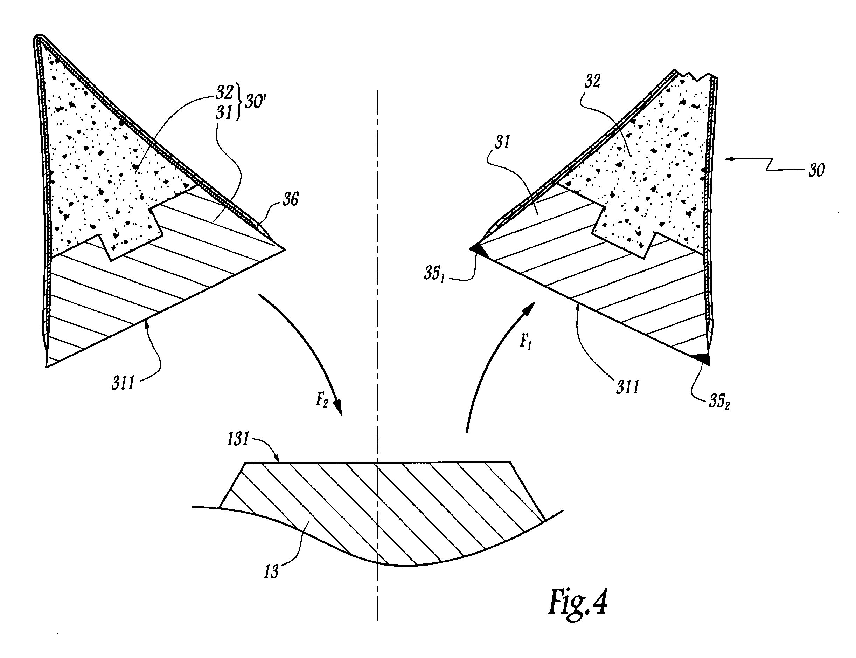

Dans le mode de réalisation des figures 3 et 4, la couche 36 de matériau résistant à l'usure est apposée uniquement sur la sous-couche 33 de métallisation et une partie des surfaces extérieures 314 et 315 du support 31, et non pas sur les surfaces 204 et 205. Ainsi, lorsque l'on procède au remplacement de la garniture 30, il suffit d'araser les cordons de soudure 35₁ et 35₂, lesquels sont directement accessibles depuis les demi-godets 11 et 12, puis de retirer la garniture usée 30. On profite alors du fait que le talon T₃ formé à l'interface entre les surfaces 131 et 311, définies comme dans le premier mode de réalisation, n'est pas soudé, c'est-à-dire que ces surfaces sont en appui simple l'une sur l'autre, pour écarter facilement la garniture 30 du corps 20, comme représenté par la flèche F₁ à la figure 4.

On peut alors nettoyer les bords de la surface 131 des reliquats des cordons 35₁ et 35₂ puis disposer une nouvelle garniture 30', formée d'un élément massif en céramique 32 et d'un support en métal 31 comme la première, sur la surface d'extrémité 131 de l'arête centrale 13 de l'auget 1, comme représenté par la flèche F₂ sur cette figure, avant de l'immobiliser sur le corps 20 par une nouvelle soudure à talon. On forme alors deux nouveaux cordons soudés analogues aux cordons 35₁ et 35₂ et, entre eux, un nouveau talon non soudé analogue au talon T₃.

Ces opérations ont lieu sans interaction avec la couche de protection 36 qui est apposée sur la garniture 30' avant son montage sur le corps 20. Comme cette couche de protection 36 ne s'étend pas jusqu'au niveau de la surface 311, il n'y a pas de risque que la nouvelle soudure à talon réalisée à l'interface entre le support 31 et le corps 20 n'endommage cette couche.

Comme dans le premier mode de réalisation, la brasure entre les éléments 31 et 32 n'est pas endommagée lors de la réalisation des cordons de soudure 35₁ et 35₂.

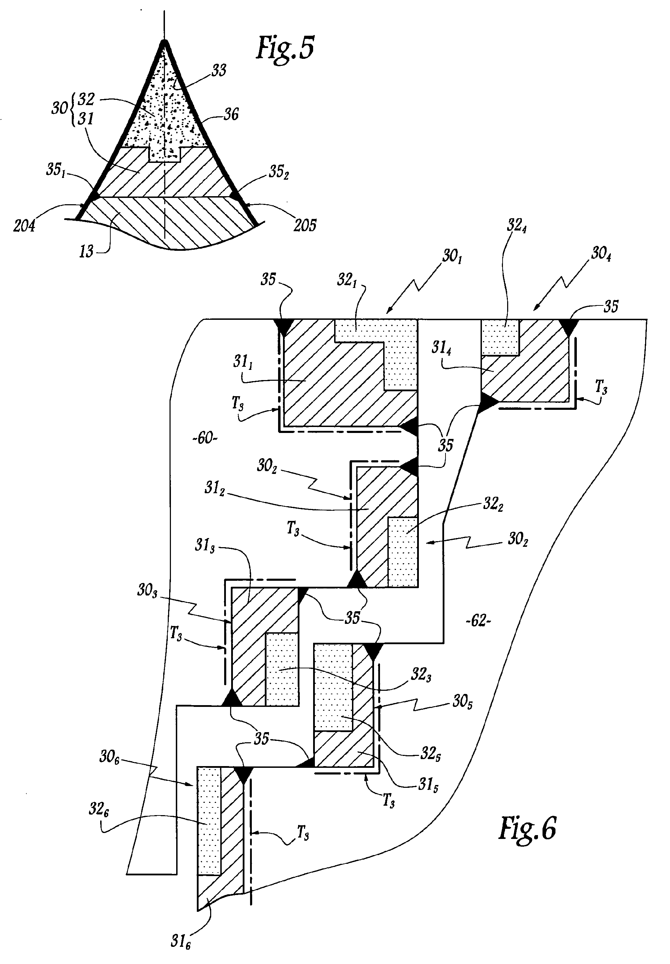

Dans le mode de réalisation de la figure 5, une sous-couche de métallisation 33 et une couche 36 de matériau résistant à l'usure sont apposées sur les surfaces externes d'une garniture réalisée par brasage d'un élément massif en céramique 32 sur un bloc support en acier 31. Ce bloc d'acier 31 est immobilisé sur l'arête 13 du corps principal 20 au moyen d'une soudure comprenant deux cordons soudés 35₁ et 35₂ entre lesquels est défini un talon T₃ non soudé d'appui de la garniture 30 sur l'arête 13. Les couches 33 et 36 recouvrent également les surfaces latérales 204 et 205 de l'arête centrale 13 du corps principal 20 de l'auget ainsi que les cordons soudés 35₁ et 35₂. Par sa dureté et sa rugosité propres, la sous-couche 33 permet de masquer les différences entre les propriétés des surfaces extérieures destinées à être revêtues par la couche 36 et celles des cordons soudés 35₁ et 35₂.

L'invention est décrite ci-dessus dans le cas où les surfaces 131 et 311 de l'arête 13 et de la garniture 30, qui forment le talon T₃ de la soudure à talon, sont planes. Ces surfaces peuvent toutefois être gauches, pour autant qu'elles ont des géométries correspondant l'une avec l'autre. Tel est également le cas pour les talons T₄ et T₅.

Dans le mode de réalisation de la figure 6, l'invention est utilisée au niveau d'un labyrinthe entre une couronne 60 de roue de turbine Francis et une partie fixe 62 d'une installation de conversion d'énergie. Des garnitures 30₁, 30₂ et 30₃ sont prévues sur la surface extérieure de la couronne 60. Trois autres garnitures 30₄, 30₅ et 30₆ sont montées sur la partie fixe 62 et définissent, soit avec l'une des garnitures 30₁, 30₂ et 30₃ montées sur la couronne 60, soit avec une autre partie de la couronne, des interstices de passage d'un écoulement d'eau secondaire par rapport à l'écoulement moteur pour la roue. Ces garnitures sont fixées, respectivement sur la couronne 60 ou sur la partie fixe 62 de l'installation, au moyen de soudures à talon dont les talons sont visibles à la figure 8 avec la référence 35.

Les talons T₃ sont définis à l'interface entre la couronne 60 et les garnitures 30₁ à 30₃ et à l'interface entre la partie fixe 62 et les garnitures 30₄ à 30₆. Dans le plan de la figure 8, ces talons T₃ ont une forme de dièdre. Ils pourraient avoir une forme arrondie, étant entendu qu'ils sont à symétrie de révolution autour de l'axe de rotation de la turbine. Pour i valant de 1 à 6, chaque garniture 30₁ est formée d'un support 31ᵢ en acier inoxydable et d'un élément massif en céramique 32ᵢ. Ces éléments sont brasés ensemble avant immobilisation de chaque garniture 30ᵢ sur la couronne 60 ou sur la partie de structure 62 par soudure à talon. Selon un aspect de l'invention qui n'est pas visible sur la figure 8, les garnitures 30ᵢ sont revêtues d'une couche de matériau de protection comparable à la couche 36 des modes de réalisation précédents et, éventuellement, d'une sous-couche de métallisation comparable à la sous-couche 33 des modes de réalisation précédents.

Les caractéristiques techniques des différents modes de réalisation mentionnés ci-dessus peuvent être combinées entre elles dans le cadre de la présente invention. En particulier, les matériaux des parties des garnitures des deuxième à quatrième modes de réalisation peuvent être les mêmes que ceux du premier mode de réalisation.

Au sens de la présente demande, le matériau constituant la couche 36 résiste à l'usure en ce sens qu'il s'use moins vite que l'acier sous l'action des particules abrasives contenues dans l'écoulement d'eau qui lèche ses surfaces mouillées. Une telle couche 36, et éventuellement une sous-couche 33, peuvent être utilisées dans le mode de réalisation de la figure 6.

Quel que soit le mode de réalisation, le fait que le composant est dès l'origine pourvu d'une ou plusieurs garnitures détachables en arasant les talons de la ou des soudures à talon facilite sa maintenance car il n'est pas nécessaire de reprendre en usinage le corps principal du composant lorsqu'on souhaite y fixer une nouvelle garniture. En outre, la géométrie et les caractéristiques de chaque nouvelle garniture sont connues du dossier de fabrication du composant. Cette garniture peut donc être préparée à l'avance, avant l'arrêt de l'installation pour maintenance.

Dans tous les modes de réalisation, les cordons de soudure 35₁, 35₂ et équivalents bordent les talons T₃ et équivalents, ce qui assure que, dès que ces cordons sont détruits, il est possible de séparer les surfaces en appui des garnitures 30, 40, 50 et 30ᵢ et des corps principaux 20, 60, 62 et équivalents.

L'invention a été représentée pour deux applications dans le domaine des turbines hydrauliques. Elle peut toutefois être mise en oeuvre avec d'autres applications, par exemple au niveau des bords d'attaque et de fuite des aubes d'une turbine Francis, au niveau des directrices et avant-directrices d'une installation, au niveau du pointeau ou du siège d'un injecteur, etc ...

L'invention a été décrite dans le cas de supports ou de corps 31 en acier. Ceux-ci peuvent être réalisés dans d'autres métaux ou alliages de métaux, pour autant qu'ils sont compatibles avec une soudure à talon sur un corps principal du composant.

## Revendications

1. Procédé de fabrication d'un composant (1, 60, 62) de machine hydraulique dont une partie au moins (14, 17, 18) est susceptible d'usure, ce procédé comprend une étape b) consistant à fixer une garniture (30, 40, 50, 30i) sur un corps (20, 60, 62) principal du composant, au moyen d'au moins un cordon de soudure (35₁, 35₂, 45₁, 45₂, 55₁, 55₂; 35) et en ménageant au moins un talon (T₃, T₄, T₅) non soudé entre la garniture et le corps principal, **caractérisé en ce qu'**il comprend une étape préalable à l'étape b) et consistant à :
a) pré-fabriquer une garniture (30, 50 ; 30ᵢ) en brasant un élément massif (32, 42, 52 ; 32ᵢ) en céramique sur un support en métal (31, 41, 51 ; 31ᵢ).

2. Procédé selon la revendication 1, **caractérisé en ce qu'**il comprend une étape consistant à :
c) apposer, au moins sur la garniture (30, 40, 50) et par projection thermique, au moins une couche (36) de matériau résistant à l'usure.

3. Procédé selon la revendication 2, **caractérisé en ce qu'**il comprend une étape préalable à l'étape c) et consistant à :
d) apposer, au moins sur la garniture et par projection thermique, une sous-couche (33) de métallisation destinée à être recouverte par la couche (36) de matériau résistant à l'usure.

4. Procédé selon la revendication 3, **caractérisé en ce que** l'étape a) précède l'étape d) et, lors de l'étape d), la sous-couche (33) est apposée en recouvrant au moins la surface visible (324) de l'élément massif (32), le joint de brasage (34) entre l'élément massif (32) et le support (31) et une partie des surfaces latérales (314, 315) du support.

5. Procédé selon l'une des revendications précédentes, **caractérisé en ce que** lors de l'étape a), l'élément massif (32) en céramique et le support en métal (31) sont pré-positionnés en engageant un élément (323), en saillie par rapport à une surface (322) d'une première pièce (32), parmi l'élément massif en céramique et le support en métal, dans un logement correspondant (313) en creux par rapport à une surface (312) de l'autre pièce (31), parmi l'élément massif en céramique et le support en métal, avant le brasage entre ces pièces.

6. Procédé de maintenance d'un composant de machine hydraulique fabriqué grâce à un procédé dans lequel on pré-fabrique une garniture (30, 50, 30ᵢ) en brasant un élément massif (32, 42, 52, 32ᵢ) céramique sur un support en métal (31, 41, 51, 31ᵢ) est on fixe cette garniture sur un corps principal (20, 60, 62) du composant (1, 60, 62) au moyen d'au moins un cordon de soudure (35₁, 35₂, 45₁, 45₂, 55₁, 552 ; 35) et en ménageant au moins un talon (T₃, T₄, T₅) non soudé entre la garniture et le corps principal, ce procédé de maintenance comprenant des étapes consistant à :
e) détruire le ou les cordons de soudure (35₁, 35₂, 45₁, 45₂, 55₁, 55₂; 35) ;
f) séparer (F₁) la garniture (30, 50 ; 30ᵢ) du corps principal (20 ; 60, 62) en écartant (F₁) l'une de l'autre les surfaces (131, 311) de la garniture et du corps principal formant le talon (T₃, T₄, T₅) non soudé ; et
g) fixer, grâce à au moins un nouveau cordon de soudure et en ménageant un nouveau talon soudé, une nouvelle garniture (30') sur le corps principal (20), à la place de celle (30) qui a été précédemment séparée du corps principal.
**caractérisé en ce que** la nouvelle garniture (30') est formée en brasant un élément massif (32) en céramique sur un support en métal (31).

7. Composant neuf (1, 60, 62) de machine hydraulique, dont une partie au moins est sujette à l'usure et qui comprend au moins une garniture (30, 40, 50 ; 30ᵢ) fixée, par au moins un cordon soudé (35₁, 35₂, 45₁, 45₂, 55₁, 55₂ 35) qui borde un talon (T₃, T₄, T₅) non soudé, sur un corps principal (20 ; 60, 62) du composant, **caractérisé en ce que** cette garniture est formée par un élément massif en céramique (32, 42, 52 ; 32ᵢ) brasé sur un support en métal (31, 41, 51 ; 31ᵢ) et constitue la partie du composant qui est sujette à l'usure.

8. Composant selon la revendication 7, **caractérisé en ce que** la garniture (30) est revêtue d'une couche (36) de matériau résistant à l'usure.

9. Composant selon l'une des revendications 7 ou 8, **caractérisé en ce que** la garniture (30) est revêtue d'une sous-couche de métallisation (33), elle-même recouverte par la couche (36) de matériau résistant à l'usure.

10. Composant selon la revendication 9, **caractérisé en ce que** la couche (36) de matériau résistant à l'usure est réalisé en carbure de tungstène, en diamant, en nitrure de bore, en alliage de type SiC ou Al₂O₃ et **en ce que** la sous-couche de métallisation (33) est réalisée en acier, ou en alliage à base de nickel, de cobalt ou de chrome.

11. Composant selon l'une des revendications 7 à 10, **caractérisé en ce que** la garniture (30, 40, 50) est fixée sur le corps principal (20) par deux cordons de soudure (35₁, 35₂, 45₁, 45₂, 55₁, 55₂) et **en ce que** le talon non soudé (T₃, T₄, T₅) est formé entre ces cordons de soudure.

12. Composant selon l'une des revendications 7 à 11, **caractérisé en ce que** l'élément massif en céramique comprend :
- une matrice métallique choisie parmi les alliages CoCr, NiCr, NiFeBSi,
- des particules ou une poudre dispersées dans la matrice métallique choisies parmi le diamant, le nitrure de bore, le carbure de tungstène, les alliages de type SiC ou Al₂O₃ ou des mélanges de ceux-ci.

13. Composant selon l'une des revendications 7 à 12, **caractérisé en ce qu'**une première pièce (32), parmi l'élément massif en céramique (32) et le support en métal (31), est pourvue d'un pied (323) en saillie par rapport à une surface (322) en appui contre une surface (312) de l'autre pièce (31) dans laquelle est défini un logement en creux (313) de réception du pied.

14. Composant selon l'une des revendications 7 à 13, **caractérisé en ce qu'**il s'agit d'un auget (1) de turbine Pelton et la garniture (30, 40, 50) est montée au niveau d'un bord d'attaque (14) et/ou d'un bord de fuite (17, 18) de cet auget.

15. Composant selon l'une des revendications 7 à 13, **caractérisé en ce qu'**il s'agit d'une couronne (60) ou d'une partie fixe (62) de labyrinthe de turbine et la garniture (30ᵢ) définit un interstice de passage d'un écoulement d'eau secondaire.

## Claims

1. Method of manufacturing a hydraulic-machine component (1, 60, 62) of which at least part (14, 17, 18) is subject to wear, this method comprising a step b) consisting in fixing a liner (30, 40, 50, 30ᵢ) onto a main body (20, 60, 62) of the component, using at least one welded bead (35₁, 35₂, 45₁, 45₂, 55₁, 55₂; 35) and creating at least one non-welded root face (T₃, T₄, T₅) between the liner and the main body, **characterized in that** it comprises a step prior to step b) and consisting in :
a) prefabricating a liner (30, 50; 30ᵢ) by brazing a solid element (32, 42, 52; 32ᵢ) made of ceramic onto a metal carrier (31, 41, 51; 31ᵢ).

2. Method according to Claim 1, **characterized in that** it comprises a step consisting in:
c) affixing, by thermal spraying, at least one layer (36) of a wear-resistant material at least on the liner (30, 40, 50).

3. Method according to Claim 2, **characterized in that** it comprises a step prior to step c) and consisting in:
d) affixing, by thermal spraying and at least to the liner, a metallization sub-layer (33) that is intended to be covered with the layer (36) of wear-resistant material.

4. Method according to Claim 3, **characterized in that** step a) precedes step d) and, during step d), the sub-layer (33) is affixed covering at least the visible surface (324) of the solid element (32), the brazed joint (34) between the solid element (32) and the carrier (31), and a part of the lateral surfaces (314, 315) of the carrier.

5. Method according to one of the preceding claims, **characterized in that** during step a), the solid element (32) made of ceramic and the metal carrier (31) are prepositioned by engaging an element (323) that projects with respect to a surface (322) of a first piece (32), out of the solid element made of ceramic and the metal carrier, in a corresponding housing (313) that is recessed in relation to a surface (312) of the other piece (31), out of the solid element made of ceramic and the metal carrier, before these pieces are brazed together.

6. Method of maintaining a hydraulic-machine component manufactured using a method according in which one prefabricates a liner (30, 50, 30ᵢ) by brazing a solid element (32, 42, 52, 32ᵢ) made of ceramic onto a metal carrier (31, 41, 51, 31ᵢ) and one fixes this liner on a main body (20, 60, 62) of the component (1, 60, 62), using at least one welded bead (35₁, 35₂, 45₁, 45₂, 55₁, 55₂ ; 35) and creating at least a non welded root face (T₃, T₄, T₅) between the liner and the main body, this method of maintaining comprising steps consisting in :
e) destroying the welded bead or beads (35₁, 35₂, 45₁, 45₂, 55₁, 55₂; 35);
f) separating (F₁) the liner (30, 50; 30ᵢ) from the main body (20; 60, 62) by parting (F₁) the surfaces (131, 311) of the liner and of the main body that forms the non-welded root face (T₃, T₄, T₅) from one another; and
g) fixing a new liner (30') onto the main body (20) in place of the one (30) previously separated from the main body, using at least one new welded bead and creating a new non-welded root face,
**characterized in that** the new liner (30') is formed by brazing a solid element (32) made of ceramic onto a metal carrier (31).

7. New hydraulic-machine component (1, 60, 62) of which at least part is subject to wear and which comprises at least one liner (30, 40, 50; 30₁) fixed, by at least one welded bead (35₁, 35₂, 45₁, 45₂, 55₁, 55₂; 35) bordering a non-welded root face (T₃, T₄, T₅), to a main body (20; 60, 62) of the component, **characterized in that** this liner is formed of a solid element made of ceramic (32, 42, 52; 32₁) brazed to a metal carrier (31, 41, 51; 31ᵢ) and constitutes that part of the component that is subject to wear.

8. Component according to Claim 7, **characterized in that** the liner (30) is coated with a layer (36) of wear-resistant material.

9. Component according to one of Claims 7 and 8, **characterized in that** the liner (30) is coated with a metallization sub-layer (33) which is itself covered with the layer (36) of wear-resistant material.

10. Component according to Claim 9, **characterized in that** the layer (36) of wear-resistant material is made of tungsten carbide, of diamond, of boron nitride, of alloy of the SiC or Al₂O₃ type, and **in that** the metallization sub-layer (33) is made of steel, or of an alloy based on nickel, cobalt, or on chromium.

11. Component according to one of Claims 7 to 10, **characterized in that** the liner (30, 40, 50) is fixed to the main body (20) by two welded beads (35₁, 35₂, 45₁, 45₂, 55₁, 55₂) and **in that** the non-welded root face (T₃, T₄, T₅) is formed between these welded beads.

12. Component according to one of Claims 7 to 11, **characterized in that** the solid element made of ceramic comprises:
- a metallic matrix chosen from the alloys CoCr, NiCr, NiFeBSi,
- particles or powder dispersed in the metallic matrix and chosen from diamond, boron nitride, tungsten carbide, alloys of the SiC or Al₂O₃ type, or mixtures thereof.

13. Component according to one of Claims 7 to 12, **characterized in that** a first piece (32) out of the solid element made of ceramic (32) and the metal carrier (31) is provided with a lug (323) that projects relative to a surface (322) resting against a surface (312) of the other piece (31) in which a recessed housing (313) to accommodate the lug is defined.

14. Component according to one of Claims 7 to 13, **characterized in that** it is a Pelton turbine bucket (1) and the liner (30, 40, 50) is mounted at a leading edge (14) and/or at a trailing edge (17, 18) of this bucket.

15. Component according to one of Claims 7 to 13, **characterized in that** it is a ring (60ᵢ) or a fixed part (62) of turbine labyrinth and the liner (30ᵢ) defines a gap through which a secondary water flow passes.

## Patentansprüche

1. Verfahren zur Herstellung einer Komponente (1, 60, 62) einer hydraulischen Maschine, von der mindestens ein Teil (14, 17, 18) empfindlich gegen Abnutzung ist, wobei das Verfahren einen Schritt b) umfasst, der darin besteht, eine Verkleidung (30, 40, 50, 30i) an einem Hauptkörper (20, 60, 62) der Komponente mittels einer Schweißnaht (35₁, 35₂, 45₁, 45₂, 55₁, 55₂, 35) zu befestigen und mindestens einen nicht geschweißten Absatz (T₃, T₄, T₅) zwischen der Verkleidung und den Hauptkörper einzuarbeiten, **dadurch gekennzeichnet, dass** es einen Schritt vor dem Schritt b) umfasst, der darin besteht, dass:
a) eine Verkleidung (30, 50; 30i) vorgefertigt wird, indem ein massives Element (32, 42, 52; 32i) aus Keramik auf einen Metallträger (31, 41, 51; 31i) gelötet wird.

2. Verfahren nach Anspruch 1, **dadurch gekennzeichnet, dass** es einen Schritt umfasst, der darin besteht:
c) auf mindestens die Verkleidung (30, 40, 50) mindestens eine Schicht (36) aus einem gegen Abnutzung widerstandsfähigen Material durch thermisches Spritzen aufzubringen.

3. Verfahren nach Anspruch 2, **dadurch gekennzeichnet, dass** es vor dem Schritt c) einen Schritt umfasst, der darin besteht:
d) auf mindestens die Verkleidung eine Metallisierungs-Unterschicht (33) durch thermisches Spritzen aufzubringen, die vorgesehen ist, von der Schicht (36) aus einem gegen die Abnutzung widerstandsfähiges Material bedeckt zu werden.

4. Verfahren nach Anspruch 3, **dadurch gekennzeichnet, dass** der Schritt a) dem Schritt d) vorangeht und bei dem Schritt d) die Unterschicht (33) aufgebracht wird, indern mindestens die sichtbare Fläche (324) des massiven Elements (32), die Lötstossstelle (34) zwischen dem massiven Element (32) und dem Träger (31) und ein Teil der Seitenflächen (314, 315) des Trägers bedeckt werden.

5. Verfahren nach einem der vorhergehenden Ansprüche, **dadurch gekennzeichnet, dass** bei dem Schritt a) das massive Element (32) aus Keramik und der Metallträger (31) vorpositioniert werden, indem ein Element (323), das in Bezug auf eine Fläche (322) eines ersten Teils (32) von den zwei Teilen massives Element aus Keramik und Metallträger hervorspringt, in eine korrespondierende, in Bezug auf eine Fläche (312) des anderen Teils (31) von den zwei Teilen massives Element aus Keramik und Metallträger vertiefte Aufnahme (313) vor dem Löten dieser Teile eingreift.

6. Verfahren zur Wartung einer Komponente einer hydraulischen Maschine, die mittels eines Verfahrens hergestellt wurde, bei dem eine Verkleidung (30, 50, 30i) vorproduziert wird, indem ein massives Element (32, 42, 52, 32i) aus Keramik auf einen Metallträger (31, 41, 51, 31i) gelötet wird und diese Verkleidung an einem Hauptkörper (20, 60, 62) der Komponente (1, 60, 62) mittels mindestens einer Schweißnaht (35₁, 35₂, 45₁, 45₂, 55₁, 55₂; 35) befestigt wird und indem mindestens ein nicht geschweißter Absatz (T₃, T₄, T₅) zwischen der Verkleidung und dem Hauptkörper eingearbeitet wird, wobei dieses Wartungsverfahren Schritte umfasst, die darin bestehen:
e) die Schweißnaht oder-nähte (35₁, 35₂, 45₁, 45₂, 55₁, 55₂, 35) zu zerstören;
f) die Verkleidung (30, 50; 30i) vom Hauptkörper (20; 60, 62) zu trennen (F₁), indem eine der Flächen (131, 311) der Verkleidung und des Hauptkörpers, die den nicht geschweißten Absatz (T₃, T₄, T₅) bilden, von der anderen entfernt wird; und
g) eine neue Verkleidung (30') an dem Hauptkörper (20) mittels mindestens einer neuen Schweißnaht und Einarbeiten eines neuen, nicht geschweißten Absatzes anstelle derjenigen (30), die zuvor vom Hauptkörper getrennt wurde, zu befestigen,
**dadurch gekennzeichnet, dass** die neue Verkleidung (30') gebildet wird, indem ein massives Element (32) aus Keramik auf einen Metallträger (31) gelötet wird.

7. Neue Komponente (1, 60, 62) einer hydraulischen Maschine, von der mindestens ein Teil einer Abnutzung unterliegt und die mindestens eine Verkleidung (30, 40, 50; 30i) umfasst, die durch mindestens eine einen nicht verschweißten Absatz (T₃, T₄, T₅) einfassende Schweißnaht (35₁, 35₂, 45₁, 45₂, 55₁, 55₂; 35) an einem Hauptkörper (20; 60, 62) der Komponente befestigt ist, **dadurch gekennzeichnet, dass** diese Verkleidung durch ein massives Keramikelement (32, 42, 52; 32i) gebildet wird, das auf einen Metallträger (31, 41, 51; 31i) gelötet ist und den Teil der Komponente bildet, die der Abnutzung unterliegt.

8. Komponente nach Anspruch 7, **dadurch gekennzeichnet, dass** die Verkleidung (30) mit einer Schicht (36) aus einem gegen Abnutzung widerstandsfähigen Material bedeckt ist.

9. Komponente nach Anspruch 7 oder 8, **dadurch gekennzeichnet, dass** die Verkleidung (30) mit einer Metallisierungs-Unterschicht (33) beschichtet ist, die selbst durch die gegen Abnutzung widerstandsfähige Schicht (36) bedeckt ist.

10. Komponente nach Anspruch 9, **dadurch gekennzeichnet, dass** die Schicht (36) aus einem gegen Abnutzung widerstandsfähigen Material aus einem Wolframkarbid, aus Diamant, aus Bornitrid, aus einer Legierung der Art SiC oder Al₂O₃ hergestellt ist und dass die Metallisierungs-Unterschicht (33) aus Stahl oder aus einer Legierung auf der Basis von Nickel, Kobalt oder Chrom hergestellt ist.

11. Komponente nach einem der Ansprüche 7 bis 10, **dadurch gekennzeichnet, dass** die Verkleidung (30, 40, 50) an dem Hauptkörper (20) durch zwei Schweißnähte (35₁, 35₂, 45₁, 45₂, 55₁, 55₂) befestigt ist und dass der nicht geschweißte Absatz (T₃, T₄, T₅) zwischen diesen Schweißnähten gebildet wird.

12. Komponente nach einem der Ansprüche 7 bis 11, **dadurch gekennzeichnet, dass** das massive Keramikelement umfasst:
- eine metallische Matrix gewählt aus den Legierungen CoCr, NiCr, NiFeBSi,
- Partikel oder ein Pulver, die in der metallischen Matrix verteilt sind und gewählt sind aus Diamant, Bornitrid, Wolframkarbid, den Leigerungen der Art SiC oder Al₂O₃ oder Mischungen derselben.

13. Komponente nach einem der Ansprüche 7 bis 12, **dadurch gekennzeichnet, dass** ein erstes Teil (32) von den zwei Teilen massives Keramikelement (32) und Metallträger (31) mit einem in Bezug auf eine Fläche (322) hervorspringenden Fuß (323) versehen ist, wobei die Fläche (322) an einer Fläche (312) des anderen Teils (31) anliegt, in der eine vertiefte Aufnahme (313) für die Anordnung des Fußes angeordnet ist.

14. Komponente nach einem der Ansprüche 7 bis 13, **dadurch gekennzeichnet, dass** es sich um eine Schaufel (1) einer Pelton-Turbine handelt und die Verkleidung (30, 40, 50) an dem Angriffsrand (14) und/oder an dem Ablaufrand (17, 18) dieser Schaufel angeordnet ist.

15. Komponente nach einem der Ansprüche 7 bis 13, **dadurch gekennzeichnet, dass** es sich um einen Kranz (60) oder einen feststehenden Teil (62) eines Labyrinths einer Turbine handelt und die Verkleidung (30) einen Zwischenraum für den Durchgang einer sekundären Wasserströmung begrenzt.
